# EUROPÄISCHE PATENTSCHRIFT

(11) **EP 1 724 709 B1**
(45) Veröffentlichungstag und Bekanntmachung des Hinweises auf die Patenterteilung: **14.09.2016**
(21) Anmeldenummer: 06009754.0
(22) Anmeldetag: 11.05.2006
(51) Int. Cl.: G06K 19/07

(54) **Verfahren zum Betreiben eines tragbaren Datenträgers**
Method for operating a portable data carrier
Procédé destiné à l'exploitation d'un support de données portatif

(30) Priorität: 13.05.2005 DE 102005023034
(43) Veröffentlichungstag der Anmeldung: 22.11.2006
(73) Patentinhaber: Giesecke & Devrient GmbH, 81677 München (DE)
(72) Erfinder: Spitz, Stephan, Dr., 81245 München (DE); Bschorr, Werner, 86426 Langweid (DE)

(56) Entgegenhaltungen:
- FR-A- 2 844 897
- GB-A- 2 298 505

## Beschreibung

Die Erfindung betrifft ein Verfahren zum Betreiben eines tragbaren Datenträgers. Weiterhin betrifft die Erfindung einen tragbaren Datenträger.

Tragbare Datenträger können sehr vielfältig eingesetzt werden, beispielsweise zur Abwicklung von Transaktionen des Zahlungsverkehrs, als Ausweisdokumente bei Zugangskontrollen, als Berechtigungsnachweis zur Nutzung eines Mobilfunksystems oder von sonstigen Dienstleistungen usw. Bei einer Reihe von Anwendungsfällen spielen Zeitinformationen eine wichtige Rolle. Beispielsweise sind Zeitinformationen im Hinblick auf Berechtigungen, die für einen begrenzten Zeitraum vergeben werden, von Bedeutung. Außerdem ist bei manchen Anwendungsfällen eine Protokollierung mit Zeitangabe vorgesehen.

Diesbezüglich ist es bereits bekannt, die benötigten Zeitinformationen von einer externen Einrichtung an den tragbaren Datenträger zu übermitteln. Dies setzt allerdings voraus, dass die externen Zeitinformationen jederzeit für den tragbaren Datenträger verfügbar sind. Bei einer Sicherheitsrelevanz der Zeitinformation ist zudem jeweils vom tragbaren Datenträger zu prüfen, ob diese von einer vertrauenswürdigen Einrichtung stammt. Eine zeitliche Überwachung eines Vorgangs durch den tragbaren Datenträger oder die Realisierung zeitabhängiger Abläufe unter der Kontrolle des tragbaren Datenträgers sind auf diese Weise nur schwer durchführbar, da der tragbare Datenträger hierzu kontinuierlich oder zumindest in kurzen Abständen mit externen Zeitinformationen versorgt werden müsste. Zeitabhängige Bedingungen werden daher in der Regel außerhalb des tragbaren Datenträgers ausgewertet. Beispielsweise aus Gründen der Sicherheit oder einer möglichst effizienten Abwicklung besteht aber bei einer Reihe von Anwendungsfällen der Wunsch, zeitabhängige Bedingungen im tragbaren Datenträger auszuwerten oder sonstige zeitabhängige Aktionen mit dem tragbaren Datenträger durchzuführen.

Aus der WO 2004/066195 A1 ist eine sichere elektronische Einheit bekannt, die eine Zeitmesseinrichtung und eine Einrichtung zur Bestätigung einer Information bezüglich eines Datums oder eines Zeitintervalls aufweist. Die Bestätigungseinrichtung empfängt von der Zeitmesseinrichtung Daten bezüglich des Datums oder des Zeitintervalls und erzeugt Bestätigungsdaten der Informationen bezüglich des Datums und des Zeitintervalls, die an eine externe Einheit gerichtet sind. Die Zeitmesseinrichtung weist einen Kondensator auf, dessen Ladungszustand für die Zeitmessung ausgewertet wird. WO 02/47020 A2 offenbart eine multiapplikationsfähige Smartcard, die es erlaubt mehrere Applikationen gleichzeitig auszuführen.

FR 2 844 897 A1 offenbart eine elektronische Einheit, insbesondere in Form einer Smart Card, die über eine autonome Zeitmeßvorrichtung verfügt, die insbesondere auf einem Kondensator basiert. Dessen Ladungszustand wird von einer Zeitmeßeinheit erfaßt. Die festgestellten Zeitwerte werden mit in einer Zeitspeichereinheit hinterlegten Werten verglichen und z.B. dazu benutzt, die Zeit bis zur nächsten erlaubten Wiederholung eines Zugriffsversuches nach einem Fehlversuch festzulegen. Durch ihre Hardwarebasiertheit ist die Realisierung der vorgeschlagenen Lösung vergleichsweise aufwendig. Der Erfindung liegt die Aufgabe zugrunde, in einem tragbaren Datenträger mit einem möglichst geringen Aufwand Zeitinformationen verfügbar zu machen.

Diese Aufgabe wird durch ein Verfahren mit der Merkmalskombination des Anspruchs 1 sowie durch einen tragbaren Datenträger gemäß Anspruch 11 gelöst.

Das erfindungsgemäße Verfahren ist für den Betrieb eines tragbaren Datenträgers vorgesehen, der eine elektronische Schaltung aufweist, in der mehrere Anwendungen implementiert sind. Die Besonderheit des erfindungsgemäßen Verfahrens besteht darin, dass von einer ersten Anwendung des tragbaren Datenträgers eine Zeitinformation bereitgestellt wird und die Zeitinformation an wenigstens eine weitere Anwendung des tragbaren Datenträgers übergeben wird.

Die Erfindung hat den Vorteil dass sie mit einem vergleichsweise geringen Aufwand Zeitinformationen innerhalb des tragbaren Datenträgers verfügbar macht. Die Zeitinformationen können von allen Anwendungen des tragbaren Datenträgers genutzt werden, falls dies gewünscht wird. Dadurch können innerhalb des tragbaren Datenträgers Vorgänge zeitabhängig abgewickelt oder überwacht werden. Dabei ist ein zuverlässiger Schutz vor Manipulationen möglich, da sämtliche Auswertungen von zeitabhängigen Ereignissen innerhalb des tragbaren Datenträgers vorgenommen werden können.

In einem bevorzugten Ausführungsbeispiel wird die Zeitinformation von der ersten Anwendung auf Basis eines Anfangswerts ermittelt. Der Anfangswert der Zeitinformation wird vorzugsweise von einer externen Quelle an die erste Anwendung übermittelt. Durch die Verwendung eines externen Anfangswerts der Zeitinformation ist es nicht erforderlich, dass der tragbare Datenträger permanent betriebsbereit ist, um die Zeitinformation fortlaufend zu aktualisieren. Es ist vielmehr ausreichend, zu Beginn jeder Betriebsphase einen Anfangswert der Zeitinformation an den tragbaren Datenträger zu übermitteln. Dies bedeutet wiederum, dass beim tragbaren Datenträger auf eine interne Energiequelle verzichtet werden kann.

Bei der externen Quelle kann es sich insbesondere um eine sogenannte Middleware handeln, d.h. eine Software, die nach Art eines Dienstleisters zwischen zwei an sich nicht verbundenen Softwarekomponenten vermittelt. Eine Middleware kann in jedem programmierbaren Gerät implementiert werden, beispielsweise in einem Personalcomputer, in einem Notebook, in einem sonstigen Klein- oder Mikrocomputer, in einem Mobilfunktelefon usw. Von besonderem Interesse für die Erfindung sind die vorstehend genannten und ggf. weitere Geräte, mit denen ein Zugang zum Internet oder einem sonstigen Datennetz möglich ist.

Um Manipulationen zu verhindern kann für die Übermittlung des Anfangswerts der Zeitinformation ein gesicherter Kanal zwischen der externen Quelle und der ersten Anwendung aufgebaut werden. Ein besonders hohes Sicherheitsniveau läßt sich dadurch erreichen, dass der gesicherte Kanal nach einer erfolgreichen Authentisierung zwischen der externen Quelle und der ersten Anwendung aufgebaut wird. Der Anfangswert der Zeitinformation kann von einer Empfangseinrichtung an die externe Quelle übermittelt werden. Auf diese Weise ist es möglich, einen Anfangwert zu verwenden, der von einer entfernt angeordneten vertrauenswürdigen Institution erzeugt wird.

Im Rahmen des erfindungsgemäßen Verfahrens kann weiterhin vorgesehen sein, dass bei der Ermittlung der Zeitinformation der Stand eines Zählers berücksichtigt wird. Der Zähler kann ein Bestandteil der ersten Anwendung oder eines Betriebssystems des tragbaren Datenträgers sein. Der Zähler wird vorzugsweise nach der Übermittlung des Anfangswerts der Zeitinformation gestartet. Bei einer ersten Variante wird der Zähler nach der Übermittlung des Anfangswerts der Zeitinformation auf den übermittelten Anfangswert gesetzt. Dies bedeutet, dass der Zähler ab diesem Zeitpunkt jeweils unmittelbar die Zeitinformation repräsentiert. Bei einer weiteren Variante wird der Stand des Zählers zur Ermittlung der Zeitinformation jeweils mit dem Anfangswert der Zeitinformation verknüpft. Bei beiden Varianten muss der Anfangswert der Zeitinformation während einer Betriebsphase des tragbaren Datenträgers nur einmal übermittelt werden. Dennoch sind durch die Nutzung des Zählers während der gesamten Betriebsphase aktuelle Zeitinformationen innerhalb des tragbaren Datenträgers verfügbar.

Der erfindungsgemäße tragbarer Datenträger weist eine elektronische Schaltung auf, in der mehrere Anwendungen implementiert sind. Die Besonderheit des erfindungsgemäßen tragbaren Datenträgers besteht darin, dass eine erste Anwendung zur Bereitstellung einer Zeitinformation und eine interne Schnittstellte zur Übergabe der Zeitinformation an wenigstens eine weitere Anwendung vorgesehen sind.

Der erfindungsgemäße tragbare Datenträger hat den Vorteil, dass für die Bereitstellung der Zeitinformation kein zusätzlicher Hardware-Aufwand erforderlich ist.

Vorzugsweise ist der erfindungsgemäße tragbare Datenträger als eine Chipkarte ausgebildet.

Die Erfindung wird nachstehend anhand der in der Zeichnung dargestellten Ausführungsbeispiele erläutert, wobei der tragbare Datenträger als eine Chipkarte ausgebildet ist. Die Erfindung bezieht allerdings gleichermaßen auch andere tragbare Datenträger ein. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für eine kontaktlose und/oder kontaktbehaftete Kommunikation mit einem Lesegerät oder Datenverarbeitungssystem (z.B. Personal Computer, Workstation, Server) haben.

Es zeigen:
- Fig. 1: ein Ausführungsbeispiel einer erfindungsgemäß ausgebildeten Chipkarte in einer möglichen Betriebsumgebung in einer stark vereinfachten Blockdarstellung und
- Fig. 2: ein Flussdiagramm für den Betrieb der in Fig. 1 dargestellten Chipkarte.

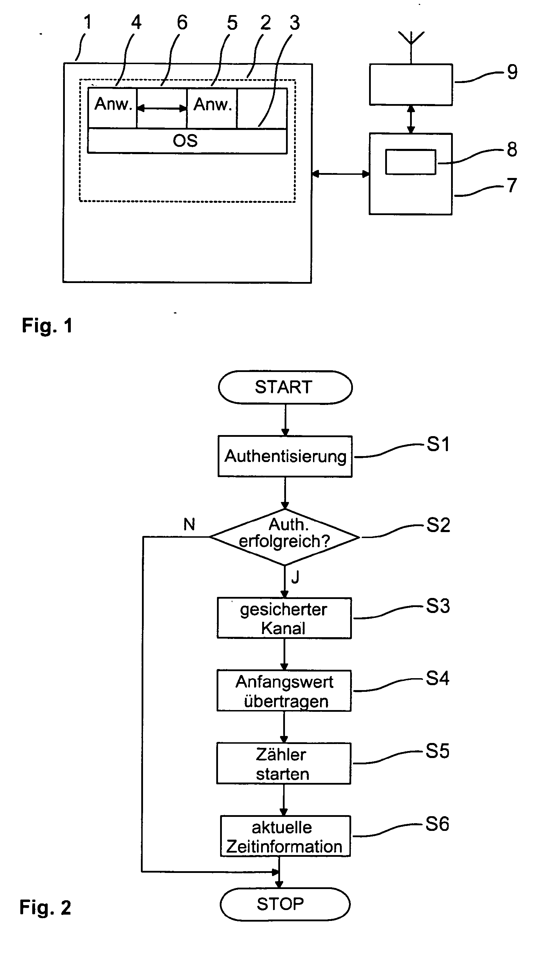

Fig. 1 zeigt ein Ausführungsbeispiel einer erfindungsgemäß ausgebildeten Chipkarte 1 in einer möglichen Betriebsumgebung in einer stark vereinfachten Blockdarstellung. Die Chipkarte 1 weist einen Mikrocontroller 2 auf, dessen Architektur in stark vereinfachter Form und lediglich zum Teil dargestellt ist.

Der Mikrocontroller 2 verfügt über ein Betriebssystem 3, das geeignet ist mehrere Programme gleichzeitig auszuführen., d.h. das Multitasking- oder Multithreadingeigenschaften aufweist. Ein Betriebssystem mit diesen Eigenschaften ist beispielsweise aus der eingangs erwähnten WO 02/47020 A2 für Chipkarten bekannt oder für Rechnersysteme allgemein aus vielen UNIX-Handbüchern entnehmbar. Multitasking-Betriebssystems sind jedoch nicht Gegenstand der hier vorgeschlagenen Lösung und werden deshalb nicht weiter erläutert.

Im Mikrocontroller 2 sind eine Zeitanwendung 4 und eine Reihe weiterer Anwendungen 5, von denen lediglich eine beispielhaft dargestellt ist, implementiert. Weiterhin ist im Mikrocontroller 2 eine interne Schnittstelle 6 zwischen der Zeitanwendung 4 und den weiteren Anwendungen 5 vorgesehen. Die interne Schnittstelle 6 kann beispielsweise als standardisierte Java-Card3.0 Schnittstelle ausgebildet sein. Insbesondere kann die Java SE Klasse java.util.Calendar als Schnittstelle in einer Java Card Laufzeitumgebung realisiert sein. Ein andere Möglichkeit zur Implemetierung der Schnittstelle 6 ist beispielsweise die Nutzung des Elementes time.h in Verbindung mit einer POSIX (Portable Operating System Interface for Unix) Schnittstelle.

Zusätzlich zur Chipkarte 1 ist in Fig. 1 eine Middleware 7 symbolisch dargestellt die mit der Chipkarte 1 in Datenverbindung steht. Bei der Middleware 7 handelt es sich um eine Software, die in einem bezogen auf die Chipkarte 1 externen Gerät implementiert ist und mit deren Hilfe beispielsweise eine Anbindung der Chipkarte 1 an das externe Gerät möglich ist. Die Middleware 7 kann in einem beliebigen programmierbaren Gerät, beispielsweise in einem Personalcomputer, in einem Notebook, in einem Mobilfunktelefon usw. implementiert sein. Von besonderem Interesse für die Erfindung sind Geräte mit einem Zugang zum Internet oder einem sonstigen Datennetz, über das Dienste verfügbar sind, bei deren Inanspruchnahme die Zeit von Relevanz ist. Die Middleware 7 weist insbesondere einen Zeitservice 8 auf und steht mit einem Empfänger 9 in Datenverbindung. Der Empfänger 9 dient dem Empfang von Zeitinformationen, die von einer entfernt angeordneten vertrauenswürdigen Institution ausgestrahlt werden.

Während des Betriebs der in Fig. 1 dargestellten Chipkarte 1 wird den weiteren Anwendungen 5 von der Zeitanwendung 4 eine Zeitinformation zur Verfügung gestellt, die ein Datum und/oder eine Uhrzeit beinhalten kann. Wie dies im Einzelnen realisiert wird, wird anhand von Fig. 2 erläutert.

Fig. 2 zeigt ein Flussdiagramm für den Betrieb der in Fig. 1 dargestellten Chipkarte 1. Dargestellt sind lediglich Verfahrensschritte, die mit der Ermittlung und Bereitstellung der Zeitinformation in Zusammenhang stehen.

Der Durchlauf des Flussdiagramms beginnt mit einem Schritt S1, in dem eine gegenseitige Authentisierung zwischen der Chipkarte 1 und der Middleware 7 durchgeführt wird. An Schritt S1 schließt sich ein Schritt S2 an, in dem die weitere Vorgehensweise vom Ergebnis der Authentisierung abhängig gemacht wird. Ist die Authentisierung fehlgeschlagen, so ist der Durchlauf des Flussdiagramms beendet. Bei einer erfolgreichen Authentisierung wird als nächstes ein Schritt S3 ausgeführt. Im Schritt S3 wird ein gesicherter Kanal zwischen der Zeitanwendung 4 der Chipkarte 1 und dem Zeitservice 8 der Middleware 7 aufgebaut. Auf Schritt S3 folgt ein Schritt S4, in dem über den gesicherten Kanal eine Zeitinformation vom Zeitservice 8 der Middleware 7 an die Zeitanwendung 4 der Chipkarte 1 übertragen wird. Diese Zeitinformation wird auf die im Folgenden noch näher beschriebene Weise als ein Anfangswert verwendet. Der Zeitservice 8 der Middleware 7 hat diese Zeitinformation beispielsweise zuvor vom Empfänger 9 erhalten.

Anschließend an Schritt S4 wird ein Schritt S5 ausgeführt, in dem die Zeitanwendung 4 der Chipkarte 1 einen Zähler startet. Der Zähler kann entweder von der Zeitanwendung 4 autark geführt werden oder mit Unterstützung des Betriebssystems 3. Danach wird ein Schritt S6 ausgeführt, in dem die Zeitanwendung 4 eine aktuelle Zeitinformation für die sonstigen Anwendungen 5 bereitstellt. Diese aktuelle Zeitinformation kann über die interne Schnittstelle 6 an jede weitere Anwendung 5 übergeben werden, die hierfür Bedarf hat.

Die Ermittlung der aktuellen Zeitinformation wird auf Basis des im Schritt S4 an die Zeitanwendung 4 übermittelten Anfangswerts und des im Schritt S5 gestarteten Zählers ermittelt. Hierzu kann beispielsweise so vorgegangen werden, dass der Anfangswert der Zeitinformation gespeichert wird und zum jeweils aktuellen Stand des Zählers addiert wird. Alternativ dazu kann der Zähler mit dem Anfangswert der Zeitinformation gestartet werden und somit der jeweils aktuelle Stand des Zählers direkt als aktuelle Zeitinformation herangezogen werden.

Die Ausführung des Schritts S6 wird für die gesamte Betriebszeit der Chipkarte 1 fortgesetzt, so dass der Durchlauf des Flussdiagramms erst mit der Außerbetriebnahme der Chipkarte 1 endet. Die Außerbetriebnahme der Chipkarte 1 erfolgt insbesondere durch Unterbrechung der Betriebsspannung, die der Chipkarte 1 von einem externen Gerät zur Verfügung gestellt wird. In diesem externen Gerät kann auch die Middleware 7 implementiert sein.

## Patentansprüche

1. Verfahren zum Betreiben eines tragbaren Datenträgers (1), der eine elektronische Schaltung (2) aufweist, die geeignet ist mehrere Anwendungen gleichzeitig auszuführen und in der mehrere Anwendungen (4, 5) implementiert sind, wobei von einer ersten Anwendung (4) des tragbaren Datenträgers (1) eine Zeitinformation bereitgestellt wird und die Zeitinformation an wenigstens eine weitere Anwendung (5) des tragbaren Datenträgers (1) übergeben wird, wobei die Zeitinformation von der ersten Anwendung (4) auf Basis eines Anfangswerts ermittelt wird, welcher von einer externen Quelle (7) an die erste Anwendung (4) übermittelt wird.

2. Verfahren nach Anspruch 1 **dadurch gekennzeichnet, dass** es sich bei der externen Quelle (7) um eine Middleware handelt.

3. Verfahren nach einem der Ansprüche 1 oder 2, **dadurch gekennzeichnet, dass** für die Übermittlung des Anfangswerts der Zeitinformation ein gesicherter Kanal zwischen der externen Quelle (7) und der ersten Anwendung (4) aufgebaut wird.

4. Verfahren nach Anspruch 3, **dadurch gekennzeichnet, dass** der gesicherte Kanal nach einer erfolgreichen Authentisierung zwischen der externen Quelle (7) und der ersten Anwendung (4) aufgebaut wird.

5. Verfahren nach einem der Ansprüche 1 bis 4, **dadurch gekennzeichnet, dass** der Anfangswert der Zeitinformation von einer Empfangseinrichtung (9) an die externe Quelle (7) übermittelt wird.

6. Verfahren nach einem der vorhergehenden Ansprüche, **dadurch gekennzeichnet, dass** bei der Ermittlung der Zeitinformation der Stand eines Zählers berücksichtigt wird.

7. Verfahren nach Anspruch 6, **dadurch gekennzeichnet, dass** der Zähler ein Bestandteil der ersten Anwendung (4) oder eines Betriebssystems (3) des tragbaren Datenträgers (1) ist.

8. Verfahren nach einem der Ansprüche 6 oder 7, **dadurch gekennzeichnet, dass** der Zähler nach der Übermittlung des Anfangswerts der Zeitinformation gestartet wird.

9. Verfahren nach einem der Ansprüche 6 bis 8, **dadurch gekennzeichnet, dass** der Zähler nach der Übermittlung des Anfangswerts der Zeitinformation auf den übermittelten Anfangswert gesetzt wird.

10. Verfahren nach einem der Ansprüche 6bis 8, **dadurch gekennzeichnet, dass** der Stand des Zählers zur Ermittlung der Zeitinformation jeweils mit dem Anfangswert der Zeitinformation verknüpft wird.

11. Tragbarer Datenträger mit einer elektronischen Schaltung (2), die geeignet ist mehrere Anwendungen gleichzeitig auszuführen und in der mehrere Anwendungen (4, 5) implementiert sind, wobei eine erste Anwendung (4) zur Bereitstellung einer Zeitinformation und eine interne Schnittstellte (6) zur Übergabe der Zeitinformation an wenigstens eine weitere Anwendung (5) vorgesehen sind, wobei die Zeitinformation von der ersten Anwendung (4) auf Basis eines Anfangswerts ermittelt wird, welcher von einer externen Quelle (7) an die erste Anwendung (4) übermittelt wird.

12. Tragbarer Datenträger nach Anspruch 11, **dadurch gekennzeichnet, dass** er als eine Chipkarte ausgebildet ist.

13. Tragbarer Datenträger nach Anspruch 12, **dadurch gekennzeichnet, daß** er über ein Betriebssystem mit Multitasking- oder Multithreadingeigenschaften verfügt, das geeignet ist, mehrere Programme gleichzeitig auszuführen.

## Claims

1. A method for operating a portable data carrier (1) having an electronic circuit (2) which is suitable for executing several applications simultaneously and in which several applications (4, 5) are implemented, wherein there is made available a time information item by a first application (4) of the portable data carrier (1) and the time information item is passed to at least one further application (5) of the portable data carrier (1), wherein the time information item is ascertained by the first application (4) on the basis of an initial value which is transmitted to the first application (4) by an external source (7).

2. The method according to claim 1, **characterized in that** it at the external source (7) is a middleware.

3. The method according to any of the claims 1 or 2, **characterized in that** for the transmission of the initial value of the time information, a secure channel is established between the external source (7) and the first application (4).

4. The method according to claim 3, **characterized in that** the secure channel is established after a successful authentication between the external source (7) and the first application (4).

5. The method according to any of the claims 1 to 4, **characterized in that** the initial value of the time information is transmitted to the external source (7) by a receiving device (9).

6. The method according to any of the preceding claims, **characterized in that** the reading of a counter is taken into account when the time information is ascertained.

7. The method according to claim 6, **characterized in that** the counter is a component of the first application (4) or of an operating system (3) of the portable data carrier (1).

8. The method according to any of the claims 6 or 7, **characterized in that** the counter is started after the transmission of the initial value of the time information.

9. The method according to any of the claims 6 to 8, **characterized in that** the counter is set to the transmitted initial value after the transmission of the initial value of the time information.

10. The method according to any of the claims 6 to 8, **characterized in that** the reading of the counter is associated in each case with the initial value of the time information for ascertaining the time information.

11. A portable data carrier (1) having an electronic circuit (2) which is suitable for executing several applications simultaneously and in which several applications (4, 5) are implemented, wherein a first application (4) is provided for making available a time information item, and an internal interface (6) is provided for passing the time information item to at least one further application (5), wherein the time information item is ascertained by the first application (4) on the basis of an initial value transmitted to the first application (4) by an external source (7).

12. The portable data carrier according to claim 11, **characterized in that** it is formed as a chip card.

13. The portable data carrier according to claim 12, **characterized in that** it has an operating system with multi-tasking or multi-threading properties that is suitable for executing several programs simultaneously.

## Revendications

1. Procédé d'exploitation d'un support de données (1) portable comportant un circuit électronique (2) qui est adapté à exécuter plusieurs applications en même temps et dans lequel sont implémentées plusieurs applications (4, 5), cependant que,
par une première application (4) du support de données (1) portable, une information temporelle est mise à disposition, et l'information temporelle est remise à au moins une autre application (5) du support de données (1) portable, l'information temporelle étant déterminée par la première application (4) sur la base d'une valeur initiale transmise par une source (7) externe à la première application (4).

2. Procédé selon la revendication 1, **caractérisé en ce que** la source (7) externe consiste en un intergiciel.

3. Procédé selon une des revendications 1 ou 2, **caractérisé en ce que**, pour la transmission de la valeur initiale de l'information temporelle, un canal sécurisé entre la source (7) externe et la première application (4) est établi.

4. Procédé selon la revendication 3, **caractérisé en ce que** le canal sécurisé est établi après une authentification aboutie entre la source (7) externe et la première application (4).

5. Procédé selon une des revendications de 1 à 4, **caractérisé en ce que** la valeur initiale de l'information temporelle est transmise par un dispositif de réception (9) à la source (7) externe.

6. Procédé selon une des revendications précédentes, **caractérisé en ce que**, lors de la transmission de l'information temporelle, le niveau d'un compteur est pris en compte.

7. Procédé selon la revendication 6, **caractérisé en ce que** le compteur est une partie constituante de la première application (4) ou d'un système d'exploitation (3) du support de données (1) portable.

8. Procédé selon une des revendications 6 ou 7, **caractérisé en ce que** le compteur est démarré après la transmission de la valeur initiale de l'information temporelle.

9. Procédé selon une des revendications de 6 à 8, **caractérisé en ce que** le compteur est, après la transmission de la valeur initiale de l'information temporelle, mis sur la valeur initiale transmise.

10. Procédé selon une des revendications de 6 à 8, **caractérisé en ce que** le niveau du compteur est, pour la détermination de l'information temporelle, lié respectivement à la valeur initiale de l'information temporelle.

11. Support de données portable ayant un circuit électronique (2) qui est adapté à exécuter plusieurs applications en même temps et dans lequel sont implémentées plusieurs applications (4, 5), cependant que,
une première application (4) pour la mise à disposition d'une information temporelle et une interface (6) interne pour la remise de l'information temporelle à au moins une autre application (5) sont prévues, cependant que l'information temporelle est déterminée par la première application (4) sur la base d'une valeur initiale, laquelle est transmise par une source (7) externe à la première application (4).

12. Support de données portable selon la revendication 11, **caractérisé en ce qu'**il est réalisé en tant qu'une carte à puce.

13. Support de données portable selon la revendication 12, **caractérisé en ce qu'**il dispose d'un système d'exploitation (3) à propriétés multitasking ou multithreading qui est adapté à exécuter plusieurs programmes en même temps.
